# EUROPEAN PATENT SPECIFICATION

(11) **EP 2 804 348 B1**
(45) Date of publication and mention of the grant of the patent: **23.11.2016**
(21) Application number: 12865247.6
(22) Date of filing: 10.01.2012
(51) Int. Cl.: H04L 12/42, H04L 12/46, H04L 12/26, H04L 12/705, H04L 12/24

(54) **NETWORK SYSTEM**
NETZWERKSYSTEM
SYSTÈME DE RÉSEAU

(43) Date of publication of application: 19.11.2014
(73) Proprietor: Mitsubishi Electric Corporation, Tokyo 100-8310 (JP)
(72) Inventor: SHIGEEDA, Tetsuya, Tokyo 100-8310 (JP)
(74) Representative: Witte, Weller & Partner Patentanwälte mbB
(86) International application number: PCT/JP2012/050279
(87) International publication number: WO 2013/105218

(56) References cited:
- EP-A1- 2 178 249
- JP-A- 2002 051 067
- JP-A- 2006 148 922
- JP-A- 2008 547 296
- US-A1- 2007 140 237
- US-A1- 2008 123 562
- US-A1- 2010 020 809

## Description

### Field

The present invention relates to a network system with a redundant configuration.

### Background

The document US 2010/00208909 A1 discloses a true ring network. To prevent data packets from being switched in an endless loop around the ring network, network devices implement a source address filtering method where a data packet is dropped by the network device when the source address of the data packet matches a local MAC address. In this manner, any data packets will only travel around the ring once and then the data packet will be dropped when it arrives at the originating network device. A processor at each network device is configured to transmit data traffic onto the ring in a single direction only. Broadcast or multicast data packets will not be transmitted in both directons.

In order to increase the availability of a network, it is general to implement network redundancy. The network redundancy is to secure an additional network apparatus and an additional network line and set them in standby mode as a backup system. In a case where a network apparatus or a network line in operation is down, it is switched to the standby backup system, and therefore the network can continue to operate without going down. A redundant network system is widely used.

When the network redundancy is implemented as described above, the availability of the network can be increased. However, the network redundancy needs to be appropriately implemented. That is, when the redundancy causes a loop to be formed in the network and then a broadcast frame is transmitted, the broadcast frame continuously circulates around this loop, thereby eventually using up the communication band and bringing the network system down. The phenomenon as described above is referred to as "broadcast storm". In order to prevent this phenomenon and properly operate the redundant network, a spanning tree protocol has been conventionally used, for example (see, for example, Non Patent Literature 1).

A spanning tree is a function provided to switches that constitute the network in order to prevent the broadcast frame from continuously circulating around the loop. This function is realized by a spanning tree protocol. Even though there is a loop in the network constituted by the switches, when the spanning tree is enabled, a port (a blocking port) that does not receive communication in practice is automatically set and eventually a tree structure is formed with one of the switches at the top.

### Citation List

### Non Patent Literature

Non Patent Literature 1: "Routing & Switching Handbook", Gene, Shuwa System Co., Ltd, (Chapter 4 "Spanning Tree Protocol")

### Summary

### Technical Problem

Meanwhile, a subnetwork connected to a backbone network is considered. In a case where the connection of the subnetwork to the backbone network is particularly important, the subnetwork can have a redundant configuration by being connected to the backbone network at two points.

However, as a result of this connection at two points, a loop is formed by the backbone network and the subnetwork, thereby causing a broadcast storm. In order to prevent the broadcast storm, it is necessary not to form a loop communication path.

As described above, the spanning tree protocol can be used to solve this loop-structure problem, for example. In that case, both the backbone network and the subnetwork are required to comply with the spanning tree protocol. Therefore, in a case where a constructed backbone network does not comply with the spanning tree protocol, it is necessary to reconfigure a system in order to connect a subnetwork to the backbone network, such that not only the subnetwork but also the backbone network complies with the spanning tree protocol.

Further, there is a problem that when the spanning tree protocol is used in practice, a considerable amount of time is required for convergence of the spanning tree because of processes such as analyzing the connecting structure of the network.

The present invention has been achieved to solve the above problems, and, in a case where the network is constituted by connecting a subnetwork to a backbone network at two points, an object of the present invention is to provide a network system that is capable of preventing formation of a loop communication path with a simple mechanism without using any spanning tree protocol and also increasing the redundancy of a network.

### Solution to Problem

The present invention is directed to a network system as defined in claim 1

### Advantageous Effects of Invention

According to the present invention, in a network in which switch devices positioned at both ends of a subnetwork that is a linear network are connected to a backbone network, formation of a loop communication path can be prevented with a simple mechanism without using any spanning tree protocol, and also the redundancy of the network can be increased. In addition, the occurrence of a delivery failure of a packet can be prevented at the time of the occurrence of a fault, and fault resistance of the network can be improved.

### Brief Description of Drawings

FIG. 1 is a configuration example of a network system according to a first embodiment.
FIG. 2 is an example of a broadcast-packet transmitting operation in the network system according to the first embodiment.
FIG. 3 is an example of the broadcast-packet transmitting operation in the network system according to the first embodiment.
FIG. 4 is a configuration example of a network system according to a second embodiment.
FIG. 5 is a configuration example of a network system according to a third embodiment.
FIG. 6 is an example of a broadcast-packet transmitting operation in the network system according to the third embodiment.
FIG. 7 is an example of the broadcast-packet transmitting operation in the network system according to the third embodiment.
FIG. 8 is a configuration example of a network system according to a fourth embodiment.

### Description of Embodiments

Exemplary embodiments of a network system according to the present invention will be explained below in detail with reference to the accompanying drawings. The present invention is not limited to the embodiments.

### First embodiment

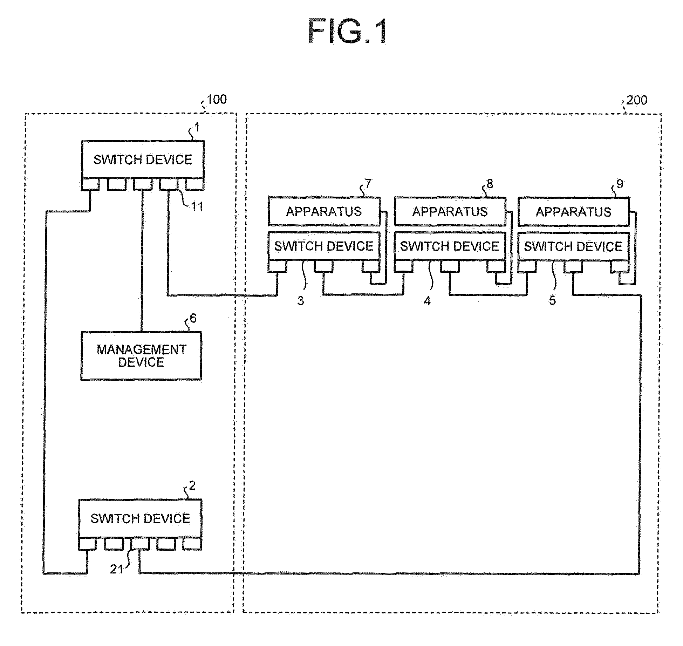

FIG. 1 is a configuration example of a network system according to a first embodiment. As shown in FIG. 1, the network system according to the present embodiment is constituted by a backbone network 100 and a subnetwork 200 that is connected to the backbone network 100 at two points. The backbone network 100 is configured to include switch devices 1 and 2. The subnetwork 200 includes switch devices 3 to 5. The subnetwork 200 is a linear network in which switch devices are arranged linearly (also referred to as "in a daisy chain"). The switch devices 1 to 5 are Ethernet^{®} switches. The number of switch devices that constitute the backbone network 100 is not limited to two. Three or more switch devices can constitute the backbone network 100. Similarly, the number of switch devices that constitute the subnetwork 200 is not limited to three.

Each of the switch devices 3 and 5 positioned at both ends of the linear network includes a physical port that serves as an endpoint of the linear network. The physical port of the switch device 3 on its endpoint side is connected to a physical port 11 of the switch device 1. The physical port of the switch device 5 on its endpoint side is connected to a physical port 21 of the switch device 2. A management device 6 is connected to the switch device 1. Apparatuses 7 to 9 are connected to the switch devices 3 to 5, respectively. The management device 6 can be connected to any of the switch devices that constitute the backbone network. In FIG. 1, the number of ports in each of the switch devices 3 to 5 is three, and one apparatus is connected to one switch device. However, each of the switch devices 3 to 5 can include more ports so as to connect two or more apparatuses to one switch device. Certainly, it suffices that a switch device to which an apparatus is not connected is included.

The management device 6 is a device that monitors a state of each of the apparatuses in the network system (the apparatuses 7 to 9 in the example in FIG. 1), and that performs fault detection and the like. In order to monitor the state of the apparatuses, the management device 6 utilizes the backbone network 100 and the subnetwork 200 to regularly communicate with these apparatuses. That is, the management device 6 transmits a signal to each of the apparatuses 7 to 9 at a regular interval for example, and in response to this signal, the apparatuses 7 to 9 send a signal back to the management device 6.

As shown in FIG. 1, in the network system according to the present embodiment, a loop is formed by the backbone network 100 and the subnetwork 200. Therefore, a solution to a broadcast storm is necessary. A method of preventing the broadcast storm is described below.

In the switch device 1, the physical port 11 passes a packet with a logical port 4000 (a packet with the logical port number 4000) in a direction from the backbone network 100 toward the linear network (the subnetwork 200), and blocks a packet with the logical port 4000 arriving from the reverse direction. In the switch device 2, the physical port 21 passes a packet with the logical port 4000 in a direction from the backbone network 100 toward the linear network, and blocks a packet with the logical port 4000 arriving from the reverse direction (the same operation as the physical port 11 of the switch device 1). The physical port 21 also blocks all packets other than a packet with the logical port 4000. That is, in the backbone network 100, when a packet with the logical port 4000 is transmitted from the subnetwork 200, one of the two physical ports of the switch devices to which the subnetwork 200 is connected blocks (discards) this packet and passes all packets other than this packet. The other physical port passes only a packet with the logical port 4000 heading from the backbone network 100 toward the subnetwork 200, and blocks all packets other than this packet.

An operation of the network system shown in FIG. 1 is explained. An operation of the network system when the management device 6 broadcasts a packet with the logical port 4000 to the apparatuses 7, 8, and 9 located in the subnetwork 200 is explained as an example.

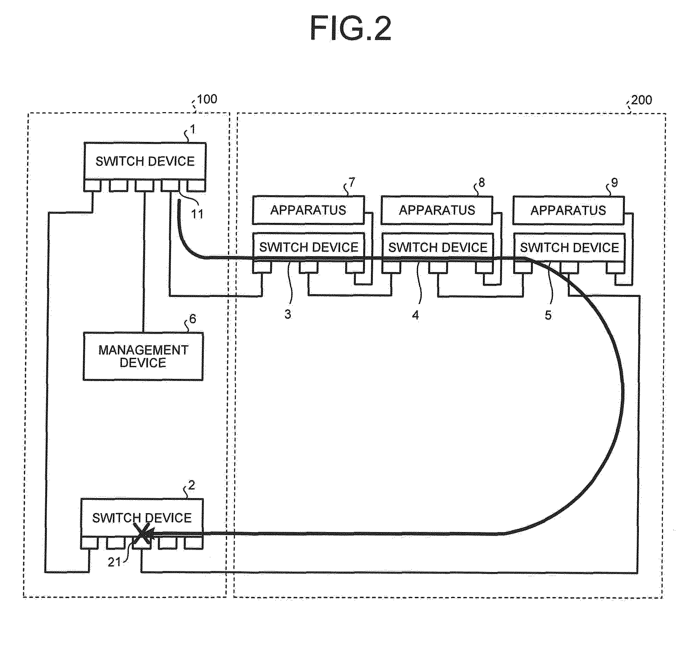

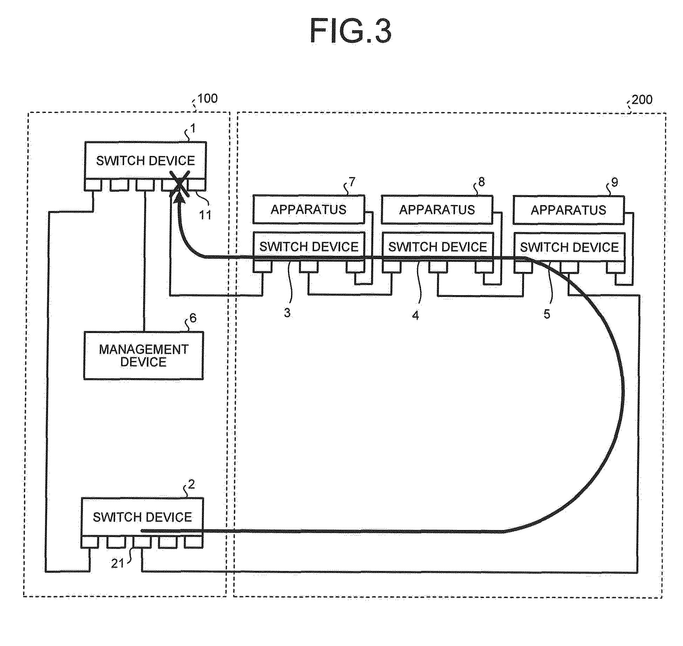

A flow of a packet with the logical port 4000 is explained with reference to FIGS. 2 and 3. A broadcast packet with the logical port 4000 transmitted from the management device 6 arrives at the switch devices 1 and 2. The packet having arrived at the switch device 1 arrives at the switch device 3, the switch device 4, and the switch device 5 via the physical port 11 as shown in FIG. 2. This packet then arrives at the apparatus 7, the apparatus 8, and the apparatus 9 because it is a broadcast packet. This packet also passes through the switch device 5 and arrives at the physical port 21 of the switch device 2, but is blocked by the physical port 21. Therefore, the occurrence of a loop of the broadcast packet with the logical port 4000 sent to the subnetwork 200 via the physical port 11 of the switch device 1 is prevented.

Meanwhile, the broadcast packet with the logical port 4000 transmitted from the management device 6 arrives at the switch device 2, and then arrives at the switch device 5, the switch device 4, and the switch device 3 respectively in this order via the physical port 21 as shown in FIG. 3. This packet then arrives at the apparatus 9, the apparatus 8, and the apparatus 7 because it is a broadcast packet. This packet also passes through the switch device 3 and arrives at the physical port 11 of the switch device 1, but is blocked by the physical port 11. Therefore, the occurrence of a loop of the broadcast packet with the logical port 4000 sent to the subnetwork 200 via the physical port 21 of the switch device 2 is prevented.

A loop does not occur because a broadcast packet with the logical port 4000 transmitted from the apparatuses 7 to 9 in the subnetwork 200 is blocked by the physical port 11 of the switch device 1 or by the physical port 21 of the switch device 2. Further, a loop does not occur because broadcast packets other than a broadcast packet with the logical port 4000 are blocked by the physical port 21 of the switch device 2.

A broadcast packet with the logical port 4000 transmitted by the management device 6 arrives at the apparatus 7, the apparatus 8, and the apparatus 9 through two paths. Therefore, even when any one of the switch devices 3, 4, and 5 becomes faulty, it is still possible for the broadcast packet with the logical port 4000, transmitted by the management device 6, to arrive at all apparatuses except the apparatus connected to the faulty switch device.

For example, a case is assumed that the network system according to the present embodiment is constructed within a train, and an apparatus connected to the backbone network 100 broadcasts a packet for a sound guide with the logical port 4000 to be distributed to apparatuses connected to the subnetwork 200 in each vehicle. In this case, even when the subnetwork 200 becomes faulty at one point, the voice guide can be continued without interruption. Generally, a conventional network system is configured to block a packet at one point (by the same switch device) to prevent the occurrence of a loop, and upon detecting a fault, the conventional network system changes the setting of switch devices to switch to another path. Therefore, there is a possibility of a packet not arriving at a part of the apparatuses during a period from the occurrence of a fault to the completion of switching to another path. On the other hand, in the network system according to the present embodiment, a packet can arrive at all the apparatuses even when a fault has occurred. A case where a network system is constructed within a train is explained separately.

As described above, in the network system according to the present embodiment, among the switch devices that constitute the backbone network, two switch devices block a packet with a specific logical port received from the subnetwork, where to these two switch devices, the switch devices positioned at both ends of the subnetwork that is a linear network are connected. Further, one of the two switch devices blocks all packets other than a packet with the specific logical port. In other words, one of the two physical ports to which the subnetwork is connected blocks a packet with a specific logical port number transmitted from the subnetwork, and passes other packets, and the other physical port passes a packet with the specific logical port number transmitted from the backbone network, and blocks other packets. Therefore, formation of a loop communication path can be prevented with a simple mechanism without using any spanning tree protocol, and also the redundancy of the network can be increased. Further, the occurrence of a delivery failure of a packet can be prevented at the time of the occurrence of a fault, and a network system with improved fault resistance can be realized.

In the present embodiment, a determination of passing or blocking a packet is made based on whether the logical port number is 4000. However, this determination can be made by using another logical port number. Instead of the logical port number, a value of a specific position of a packet can be used to make the determination of passing or blocking a packet. It is also possible to use multicast instead of broadcast so as to make the determination of passing or blocking a packet based on a multicast address.

There has been explained a case where the switch devices at both ends of the linear network are respectively connected to different switch devices in the backbone network. However, it suffices that the switch devices at both ends of the linear network are connected to the same switch device in the backbone network.

Further, it suffices that a packet with a specific logical port number is blocked not by the switch devices in the backbone network, but by the switch devices at both ends of the subnetwork (the switch devises connected to the backbone network) so as not to flow toward the backbone network.

### Second embodiment

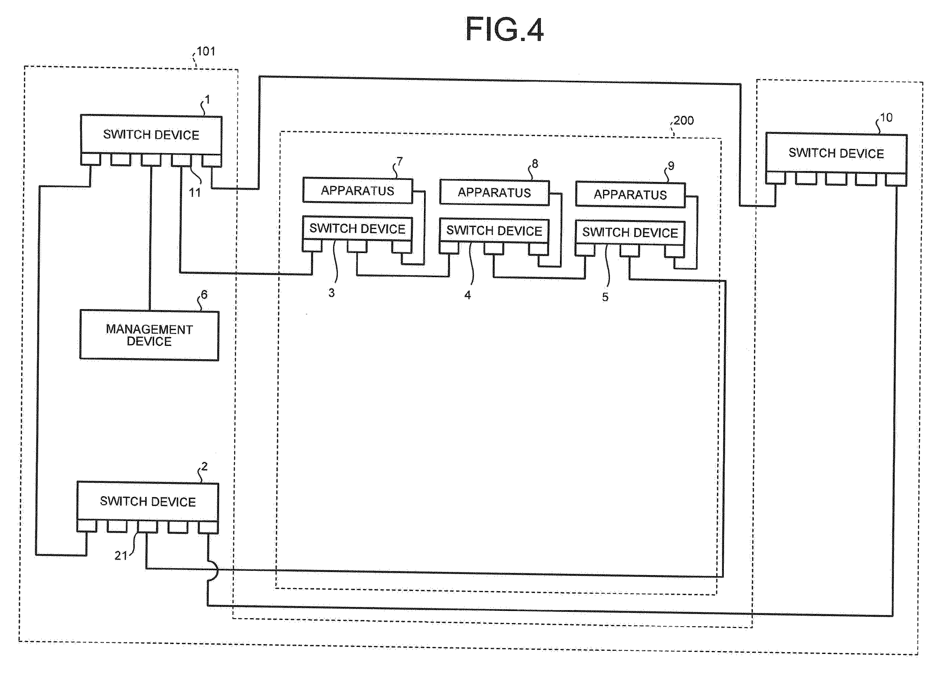

FIG. 4 is a configuration example of a network system according to a second embodiment. In the network system according to the present embodiment, the backbone network 100 in the network system (see FIG. 1) explained in the first embodiment is replaced with a backbone network 101. In the present embodiment, only elements different from those of the first embodiment are explained.

The backbone network 101 is obtained by adding a switch device 10 to the backbone network 100 included in the network system according to the first embodiment. The switch devices 1 and 2 are connected to the switch device 10. A loop is formed by the switch devices 1, 2, and 10 in the backbone network 101. The switch devices 1, 2, and 10 comply with an Ethernet ring protocol. Even when one switch device that constitutes the backbone network 101 becomes faulty, the remaining switch devices still maintain transmission in the backbone network except the faulty switch device.

When a packet with a specific logical port number (4000, for example) is transmitted from the subnetwork 200, one of the switch devices 1 and 2 blocks this packet. The other switch device passes only a packet with the specific logical port number heading from the backbone network 101 toward the subnetwork 200, and blocks all packets other than this packet. That is, the switch devices 1 and 2 in the present embodiment are obtained by making the switch devices 1 and 2 explained in the first embodiment comply with the Ethernet ring protocol. The switch device 10 does not block any packets.

In the network system according to the present embodiment, because the backbone network has a ring configuration, it is still possible for a broadcast packet with a specific logical port number (4000, for example) transmitted by an apparatus connected to the backbone network, such as the management device 6, to arrive at all apparatuses even when either one of the switch devices 2 and 10 that constitute the backbone network becomes faulty. Further, even when any one of the switch devices 3 to 5 that constitute the linear network becomes faulty, a broadcast packet transmitted from the backbone network can arrive at all apparatuses except the apparatus connected to the faulty switch device.

### Third embodiment

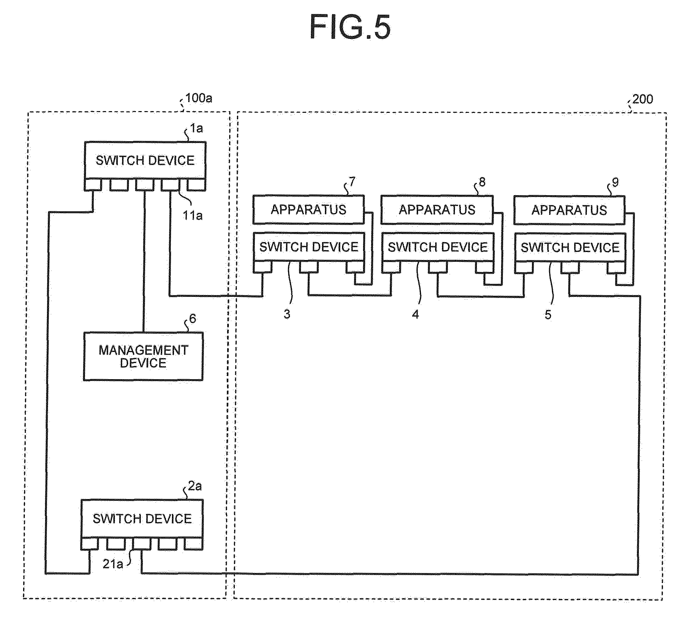

FIG. 5 is a configuration example of a network system according to a third embodiment. In the network system according to the present embodiment, the backbone network 100 in the network system (see FIG. 1) explained in the first embodiment is replaced with a backbone network 100a. In the present embodiment, only elements different from those of the first embodiment are explained.

In the backbone network 100a, the switch devices 1 and 2 in the backbone network 100 included in the network system according to the first embodiment are replaced with switch devices 1a and 2a, respectively. The connecting relationship between the switch devices 1a and 2a is the same as the connecting relationship between the switch devices 1 and 2 in the first embodiment. The connecting relationship between the backbone network 100a and the subnetwork 200 is the same as the connecting relationship between the backbone network 100 and the subnetwork 200 in the first embodiment.

In the network system according to the present embodiment, the switch devices 1a and 2a to which the subnetwork 200 is connected have a function described later (a function of passing or blocking a specific packet with exception) in addition to the function that the switch devices 1 and 2 according to the first embodiment 1 have.

In the switch device 1a, a physical port 11a passes a packet with the logical port 4000 in a direction from the backbone network 100a toward the linear network (the subnetwork 200), and blocks a packet with the logical port 4000 arriving from the reverse direction (the same operation as the physical port 11 in the first embodiment). Further, the physical port 11a passes a packet with a logical port 4001 in a direction from the linear network toward the backbone network 100a, and blocks a packet with the logical port 4001 arriving from the reverse direction. Furthermore, the physical port 11a passes a packet with a logical port 4002 in a direction from the linear network toward the backbone network 100a, and blocks a packet with the logical port 4002 arriving from the reverse direction. In the switch device 2a, a physical port 21a passes a packet with the logical port 4000 in a direction from the backbone network 100a toward the linear network, and blocks a packet with the logical port 4000 arriving from the reverse direction (the same operation as the physical port 21 in the first embodiment). Further, the physical port 21a passes a packet with the logical port 4002 in a direction from the linear network toward the backbone network 100a, and blocks a packet with the logical port 4002 arriving from the reverse direction. The physical port 21a blocks all packets other than these packets.

That is, in the backbone network 100a, two physical ports of the switch devices to which the subnetwork 200 is connected perform the same operation as in the first embodiment. Further, one of the two physical ports blocks packets with the logical ports 4001 and 4002 when these packets are transmitted from the backbone network 100a, and passes a packet in other cases. The other physical port only passes a packet with the logical port 4002 heading from the subnetwork 200 toward the backbone network 100a, and blocks a packet in other cases.

An operation of the network system shown in FIG. 5 is explained. An operation of the network system when, in order to transmit a packet to the management device 6 located in the backbone network 100a, the apparatus 8 in the subnetwork 200 broadcasts a packet with the logical port 4001 and also broadcasts a packet with the logical port 4002 is explained as an example.

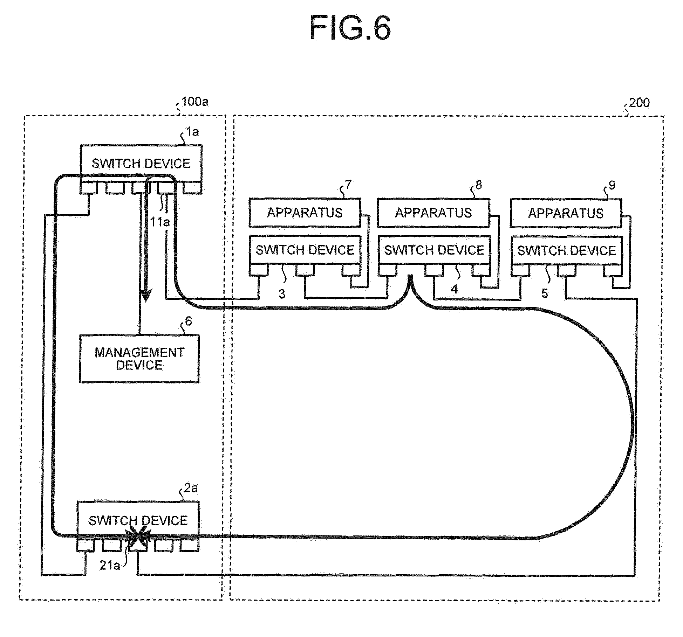

First, a flow of a packet with the logical port 4001 is explained with reference to FIG. 6. A broadcast packet with the logical port 4001 transmitted by the apparatus 8 arrives at the switch device 3 and the switch device 5 via the switch device 4. The packet having gone through the switch device 3 passes through the physical port 11a, arrives at the switch device 1a, and consequently arrives at the management device 6. The switch device 1a also forwards the packet with the logical port 4001 received from the subnetwork 200 to the switch device 2a in addition to the management device 6. However, this packet is blocked by the physical port 21a of the switch device 2a, and is not sent toward the subnetwork 200. On the other hand, the packet having arrived at the switch device 2a via the switch device 5 is also blocked by the physical port 21a. As described above, the broadcast packet with the logical port 4001 transmitted by the apparatus 8 is blocked by the switch device 2a (the physical port to which the subnetwork 200 is connected). Therefore, a broadcast packet with the logical port number 4001 can be transmitted from an apparatus in the subnetwork 200 to apparatuses (such as the management device 6) in the backbone network 100a, and also the occurrence of a loop can be prevented.

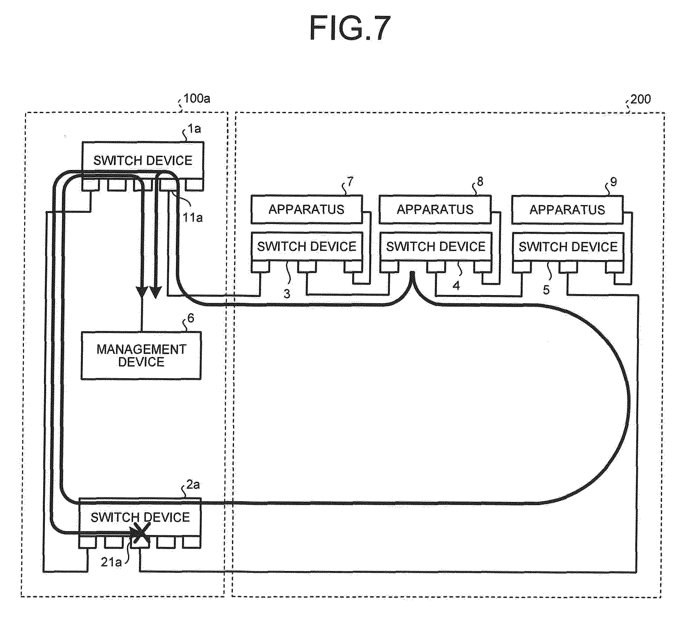

Next, a flow of a packet with the logical port 4002 is explained with reference to FIG. 7. A broadcast packet with the logical port 4002 transmitted by the apparatus 8 arrives at the switch device 3 and the switch device 5 via the switch device 4. The packet having gone through the switch device 3 arrives at the switch device 1a via the physical port 11a, and is then forwarded to arrive at the management device 6 and the switch device 2a. The broadcast packet with the logical port 4002 having arrived at the switch device 2a is blocked by the physical port 21a. On the other hand, the packet having gone through the switch device 5 passes through the switch device 2a via the physical port 21a, arrives at the switch device 1a, and then arrives at the management device 6. The broadcast packet with the logical port 4002, having passed through the switch device 2a and arrived at the switch device 1a, is blocked by the physical port 11a, and is not sent toward the subnetwork 200. As described above, the broadcast packet with the logical port 4002 transmitted by the apparatus 8 arrives at the switch device 2a via the switch device 1a, and is blocked by a physical port to which the subnetwork 200 is connected, or arrives at the switch device 1a via the switch device 2a, and is blocked by a physical port to which subnetwork 200 is connected. Therefore, a broadcast packet with the logical port number 4002 can be transmitted from an apparatus in the subnetwork 200 to apparatuses (such as the management device 6) in the backbone network 100a, and also the occurrence of a loop can be prevented.

As described above, in the network system according to the present embodiment, each apparatus in the subnetwork 200 uses two paths to transmit a broadcast packet with the logical port 4001 and a broadcast packet with the logical port 4002 to the apparatuses (such as the management device 6) in the backbone network 100a. Therefore, even when any one of the switch devices on the paths becomes faulty, these packets can arrive at the apparatuses. That is, the redundancy (fault resistance) of the network can be improved.

Similarly to the second embodiment, the backbone network can be a network with a ring configuration.

In the present embodiment, there has been explained a case where the logical port number of a broadcast packet, passing through the switch device 1a and transmitted to the apparatuses in the backbone network 100a, is different from the logical port number of a broadcast packet passing through the switch device 2a and transmitted to the apparatuses in the backbone network 100a. However, the logical port number can be common to packets passing through the respective switch devices. For example, the physical port 11a of the switch device 1a and the physical port 21a of the switch device 2a pass a packet with the logical port number 4001 when the packet arrives from the subnetwork 200, and block a packet with the logical port number 4001 when the packet arrives from the reverse direction. Further, the physical port 21a of the switch device 2a blocks all other packets with a different logical port number (except the logical port number 4000) regardless of the direction from which the packet arrives.

### Fourth embodiment

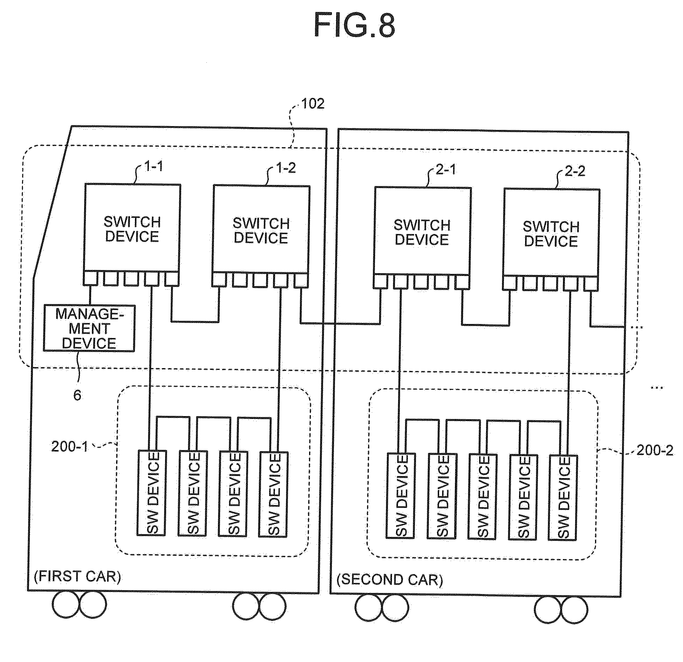

FIG. 8 is a configuration example of a network system according to a fourth embodiment. In the present embodiment, the network system constructed within a train is explained.

The network system according to the present embodiment is constituted by a backbone network 102 and subnetworks 200-1 and 200-2, each of which is connected to the backbone network 102 at two points. The backbone network 102 is configured to include switch devices 1-1, 1-2, 2-1, and 2-2 that are installed within a plurality of vehicles. Specifically, the switch devices 1-1 and 1-2 are installed in a first car, and the switch devices 2-1 and 2-2 are installed in a second car.

The subnetwork 200-1 is configured to include a plurality (four) of switch devices (denoted as "SW device" in FIG. 8), each of which is installed in the first car. The subnetwork 200-2 is configured to include a plurality (five) of switch devices (SW), each of which is installed in the second car. The subnetworks 200-1 and 200-2 are linear networks as shown in FIG. 8.

Respective switch devices included in the backbone network 102 perform the same processes as the switch devices that constitute the backbone network in the network system explained in the first embodiment to prevent the occurrence of a loop of a broadcast packet (a broadcast storm).

For example, in the switch device 1-1 in the first car, a physical port to which an apparatus in the subnetwork 200-1 is connected blocks a packet with a specific logical port number transmitted from the subnetwork 200-1, and passes all packets other than this packet. Also, in the switch device 1-2, a physical port to which an apparatus in the subnetwork 200-1 is connected passes a packet with the specific logical port number from the backbone network 102 toward the subnetwork 200-1, and blocks all packets other than this packet. In the second car, the switch device 2-1 performs the same processes as the switch device 1-1, and the switch device 2-2 performs the same processes as the switch device 1-2. Therefore, the same effects as those from the network system according to the first embodiment can be obtained.

The management device 6 connected to the switch device 1-1 is a train-information management device, for example. The train-information management device is a device that collects and manages train information, and can monitor each operating state of in-vehicle apparatuses and also individually control each operation of the apparatuses. The train-information management device regularly transmits a state-data request signal to the in-vehicle apparatuses (the apparatuses connected to the switch devices, and not shown in FIG. 8). Upon receiving this state-data request signal, each of the apparatuses sends a response signal including the state data of the apparatus back to the management device 6. In this manner, the train-information management device regularly communicates with the in-vehicle apparatuses. The management device 6 can be provided in a vehicle other than the first car, or the management device 6 can be provided in each vehicle. Examples of the in-vehicle apparatuses include a display device, an air-conditioner, and a brake device.

There has been explained a case where the network system according to the first embodiment is constructed within a train. However, it is also possible to construct the network system according to the third embodiment within a train. Similarly to the second embodiment, the backbone network 102 can be a network with a ring configuration. There has been described an example of a case where the subnetwork is constructed in each vehicle. However, the subnetwork can be constructed across a plurality of vehicles. Further, a plurality of subnetworks can be constructed in a single vehicle.

As described above, the network system explained in the first to third embodiments is constructed within a train, and is applicable as a network system that collects various information (state data) from in-vehicle apparatuses.

### Industrial Applicability

The present invention is useful as a network system with a redundant configuration.

### Reference Signs List

1 to 5, 10, 1a, 2a, 1-1, 1-2, 2-1, 2-2 switch device
6 management device
7 to 9 apparatus
11, 21, 11a, 21a physical port
100, 101, 100a, 102 backbone network
200, 200-1, 200-2 subnetwork

## Claims

1. A network system comprising:
a backbone network (100) that is constituted by combining a plurality of switch devices (1, 2); and
a subnetwork (200) that is constituted by a plurality of switch devices (3, 4, 5) connected linearly, where the switch devices (3, 5) positioned at both ends of the linear connection are connected to the backbone network (100),
**characterized in that** among physical ports included in the switch devices (1, 2), that constitute the backbone network (100), a first physical port (11), that is one of two physical ports (11, 21) to which the subnetwork (200) is connected, is configured to block a packet with a first specific logical port number (4000) having arrived from the subnetwork (200), and to pass all packets other than a packet with the first specific logical port number (4000), and a second physical port (21), that is the other of the two physical ports (11, 21), is configured to pass only a packet with the first specific logical port number (4000) having arrived from the backbone network (100), and to block all packets other than a packet with the first specific logical port number (4000),
wherein each of the packets is a broadcast packet, or a multicast packet.

2. The network system according to claim 1, **characterized in that** the backbone network (100) is a network with a ring configuration.

3. The network system according to claim 1,
**characterized in that** the first physical port (11a) is configured to further block a packet with a second specific logical port number (4002) having arrived from the backbone network (100), and
the second physical port (21a) is configured to further pass a packet with the second specific logical port number (4002) having arrived from the subnetwork (200).

4. The network system according to claim 1, **characterized in that** the backbone network and the subnetwork are provided within a train.

5. The network system according to claim 4, **characterized in that**
the backbone network is provided across train vehicles, and
the subnetwork is provided in each vehicle.

## Patentansprüche

1. Netzwerksystem, das aufweist:
ein Backbone-Netzwerk (100), das durch Kombinieren einer Vielzahl von Schaltvorrichtungen (1, 2) gebildet ist; und
ein Teilnetzwerk (200), das durch eine Vielzahl von Schaltvorrichtungen (3, 4, 5) gebildet ist, die linear verbunden sind, wobei die Schaltvorrichtungen (3, 5), die an beiden Enden der linearen Verbindung positioniert sind, mit dem Backbone-Netzwerk (100) verbunden sind,
**dadurch gekennzeichnet, dass** unter physischen Anschlüssen, die in den Schaltvorrichtungen (1, 2) inkludiert sind und die das Backbone-Netzwerk /(100) bilden, ein erster physischer Anschluss (11), der einer der beiden physischen Anschlüsse (11, 21) ist, mit dem das Teilnetzwerk (200) verbunden ist, zum Blockieren eines Pakets mit einer ersten spezifischen logischen Anschlussnummer (4000) eingerichtet ist, das vom Teilnetzwerk (200) angekommen ist, und zum Passieren aller anderen Pakete eingerichtet ist, die sich von einem Paket mit der ersten spezifischen logischen Anschlussnummer (4000) unterscheiden, und dass ein zweiter physischer Anschluss (21), der der andere der zwei physischen Anschlüsse (11, 21) ist, zum Durchlassen lediglich eines Pakets eingerichtet ist, das die erste spezifische logische Anschlussnummer (4000) aufweist und das vom Backbone-Netzwerk (100) angekommen ist, und zum Blockieren aller anderen Pakete eingerichtet ist, die sich von einem Paket mit der ersten spezifischen logischen Anschlussnummer (4000) unterscheiden,
wobei jedes der Pakete ein Broadcast-Paket oder ein Multicast-Paket ist.

2. Netzwerksystem nach Anspruch 1, das **dadurch gekennzeichnet ist, dass** das Backbone-Netzwerk (100) ein Netzwerk mit einer Ring-Konfiguration ist.

3. Netzwerksystem nach Anspruch 1,
**dadurch gekennzeichnet, dass** der erste physische Anschluss (11A) des Weiteren eingerichtet ist, ein Paket mit einer zweiten spezifischen logischen Anschlussnummer (4002) zu blockieren, das vom Backbone-Netzwerk (100) angekommen ist, und
das der zweite physische Anschluss (21A) des Weiteren eingerichtet ist, ein Paket mit der zweiten spezifischen logischen Anschlussnummer (4002) durchzulassen, das vom Teilnetzwerk (200) angekommen ist.

4. Netzwerksystem nach Anspruch 1, das **dadurch gekennzeichnet ist, dass** das Backbone-Netzwerk und das Teilnetzwerk innerhalb eines Zugs vorgesehen sind.

5. Netzwerksystem nach Anspruch 4,
**dadurch gekennzeichnet, dass**
das Backbone-Netzwerk über Zugfahrzeuge verteilet vorgesehen ist, und
dass das Teilnetzwerk in jedem Fahrzeug vorgesehen ist.

## Revendications

1. Système de réseau comprenant :
un réseau fédérateur (100) qui est constitué en combinant une pluralité de dispositifs de commutation (1, 2) ; et
un sous-réseau (200) qui est constitué par une pluralité de dispositifs de commutation (3, 4, 5) connectés linéairement, les dispositifs de commutation (3, 5) positionnés aux deux extrémités de la connexion linéaire étant connectés au réseau fédérateur (100),
**caractérisé en ce que** parmi des ports physiques inclus dans les dispositifs de commutation (1, 2), qui constituent le réseau fédérateur (100), un premier port physique (11), qui est un des deux ports physiques (11,21) auxquels le sous-réseau (200) est connecté, est configuré pour bloquer un paquet avec un premier numéro de port logique (4000) spécifique arrivé à partir du sous-réseau (200), et pour transmettre tous les paquets autres qu'un paquet avec le premier numéro de port logique (4000) spécifique, et un deuxième port physique (21), qui est l'autre des deux ports physiques (11, 21), est configuré pour transmettre uniquement un paquet avec le premier numéro de port logique (4000) spécifique arrivé à partir du réseau fédérateur (100), et pour bloquer tous les paquets autres qu'un paquet avec le premier numéro de port logique (4000) spécifique,
chacun des paquets étant un paquet de diffusion, ou un paquet de multidiffusion.

2. Système de réseau selon la revendication 1, **caractérisé en ce que** le réseau fédérateur (100) est un réseau avec une configuration en anneau.

3. Système de réseau selon la revendication 1,
**caractérisé en ce que** le premier port physique (11a) est configuré pour bloquer en outre un paquet avec un deuxième numéro de port logique (4002) spécifique arrivé à partir du réseau fédérateur (100), et
le deuxième port physique (21a) est configuré pour transmettre en outre un paquet avec le deuxième numéro de port logique (4002) spécifique arrivé à partir du sous-réseau (200).

4. Système de réseau selon la revendication 1, **caractérisé en ce que** le réseau fédérateur et le sous-réseau sont fournis à l'intérieur d'un train.

5. Système de réseau selon la revendication 4, **caractérisé en ce que**
le réseau fédérateur est fourni sur tous les véhicules d'un train, et
le sous-résau est fourni dans chaque véhicule.
